# EUROPEAN PATENT SPECIFICATION

(11) **EP 3 517 947 B1**
(45) Date of publication and mention of the grant of the patent: **05.10.2022**
(21) Application number: 19382049.5
(22) Date of filing: 24.01.2019
(51) Int. Cl.: G01M 7/06, G01N 29/04, G01M 7/02

(54) **INTERFACE FOR SYSTEM FOR ACOUSTIC CHARACTERISATION OF DEVICES SUBJECTED TO MULTIAXIAL VIBRATION**
SCHNITTSTELLE FÜR EIN SYSTEM ZUR AKUSTISCHEN CHARAKTERISIERUNG VON VORRICHTUNGEN, DIE EINER MEHRACHSIGEN VIBRATION AUSGESETZT SIND
INTERFACE POUR SYSTÈME DE CARACTÉRISATION ACOUSTIQUE DE DISPOSITIFS SOUMIS À DES VIBRATIONS MULTIAXIALES

(30) Priority: 26.01.2018 ES 201830069
(43) Date of publication of application: 31.07.2019
(73) Proprietor: Fundación para la Promoción de la Innovación, Investigación y Desarrollo Tecnológico de la Industria de Automoción de Galicia, 36400 O Porriño (Pontevedra) (ES)
(72) Inventor: GONZALEZ FIGUEROA, Damian, 36400 O Porriño (Pontevedra) (ES); TORRES FERNANDEZ, Enrique, 36400 O Porriño (Pontevedra) (ES); RIOS CAL, Julian, 36400 O Porriño (Pontevedra) (ES)
(74) Representative: Clarke Modet & Co.

(56) References cited:
- ES-A1- 2 362 834
- US-A- 4 633 716
- US-A1- 2009 223 298

## Description

### Field of the invention

The main object of the present invention is the acoustic characterisation of devices subjected to multiaxial vibration and its application in the field of acoustic and vibration tests for components of automotive vehicles. However, its use is not limited to this technological sector, being useable in other areas of technology in which the measurement and characterisation tests of the noises caused by multiaxial vibration are a functional requirement of a component.

### Background of the invention

At present, multiaxial vibration is widely used in the field of the acoustics of a vehicle, the structural vibratory analysis and durability often replacing monoaxial vibration, since the results show a greater correlation with the actual behaviour of a vehicle. The common applications use road contours to simulate in a laboratory the actual behaviour under running conditions. The type of track to be reproduced is selected according to the particular test objective (degraded surfaces for durability, comfort tracks for detecting parasitic noises, etc).

The experience shows that working with multiaxial vibration in the laboratory facilitates the reproduction of the real operating situation which leads the component to mechanical or operational failure (breakage, malfunction, noise generation, etc.) and reveals a high correlation with the test results carried out using vehicle prototypes on test tracks.

The use of a multiaxial electrohydraulic vibration system with different degrees of freedom to characterise the acoustic behaviour of a vehicle component simultaneously excited in different directions poses numerous problems since in order for these systems to be able to generate the linear and angular accelerations required to subject the test component to the required solicitation levels, noises are generated which interfere with those generated by the test sample itself.

The linear and angular acceleration levels are obtained by means of the variations in the oil flow which passes through hydraulic cylinders, being controlled by the servo valves of the multiaxial electrohydraulic vibration system. These hydraulic flow variations cause the movement of the mobile platform on which the tool and test sample are situated. In this manner, a noise level may end up being generated which may disrupt the analysis of the noise of the component being examined by the mechanisms of the vibration system, by the passage of oil through the hydraulic circuit and by the displacement of the usable work surface of the multiaxial electrohydraulic vibration system. This noise is a problem for the acoustic characterisation of components and should be insulated to minimise its influence on the acoustic evaluation of the test sample which must be studied in the laboratory.

The insulation of the mechanisms of the multiaxial electrohydraulic vibration system poses a specific problem, since, on the one hand, it should acoustically insulate the noise generated by the system and, on the other hand, it should allow its maximum movement in all the spatial degrees of freedom (both linear movements: longitudinal X, transversal Y, vertical Z and angular movements: pitch, roll, yaw). For this reason, it is necessary to acoustically insulate the multiaxial electrohydraulic vibration system without said insulation inferring or blocking the mobile platform in its entire displacement range.

However, these multiaxial electrohydraulic vibration systems with the capacity to generate elevated levels of acceleration and rotation have not generally been applied to acoustic characterisation due to the noise levels they generate and the complexity of their acoustic insulation which poses a difficult problem to overcome. This problem makes it difficult to characterise and analyse the noise of the component when it is excited by means of a multiaxial vibratory signal and it is the starting point of this invention.

Document ES 2362834A1 discloses a vibroacoustic interface with the technical features of the preamble of claim 1.

Document US2009/0223298A1 discloses a vibration table for testing products employs threaded inserts for mounting the test products or fixtures therefor on the table, where the threaded inserts have enlarged and elongated threaded shafts that engage threaded openings in the upper surface of the table, with enlarged heads on the inserts being positioned adjacent the outer surface of the table or the outer surface of an insulation layer mounted on the table.

Document US 4633716A discloses a structure to provide increased surface area on the head of a shaker used for vibrational testing, where the structure includes a base plate for attachment to the head of the shaker and a larger expanded head connected thereto by a frustoconical structure surrounding a cylindrical structure surrounding a spoke structure, all designed to increase the vibrational frequency at which undesired vibratory modes appear in the surface of the expanded head which otherwise can provide nonuniform vibration loading to the items attached thereto during testing.

### Description of the invention

The present invention proposes, as a novelty, the use of a multiaxial acoustic interface for its use in a multiaxial electrohydraulic vibration system inside an anechoic or semi-anechoic chamber in which there is a reduced level of background noise. An anechoic chamber is understood as a chamber which is insulated from the aerial transmission noise coming from the exterior by means of panels with high acoustic absorption on all faces. While, in the other case, a semi-anechoic chamber is understood as a chamber which has panels with high acoustic absorption on all faces except for the base on which there is no acoustic treatment. The chamber should be structurally insulated from the rest of the building, for example by means of a system based on multiple spring assemblies which prevent the transmission of structural noise. Optionally, the chamber can be equipped on the interior faces with additional absorption panels, for example in the form of a wedge to favour the attenuation and dispersion of the sound in its interior.

Some mechanisms themselves of the multiaxial electrohydraulic vibration system are located inside an acoustically insulated area and situated in the interior of an anechoic chamber such that it minimises the emission to the exterior of the area of the noise generated by said mechanisms. This area should have an opening, preferably on its top face which allows access to an assembly surface on the mobile platform of the vibration system and should have sufficient play to allow all the maximum movements (linear and rotational movements). An electronic control and amplification device, together with central hydraulics which feed the system, are generally installed on the exterior of the anechoic chamber.

The present invention proposes, as a novel solution, a multiaxial vibroacoustic interface to improve the characteristics and features of a multiaxial electrohydraulic vibration system for analysing the noise of the test sample subjected to vibrations. The multiaxial acoustic interface is installed in the insulation area of the vibration system. Owing to the characteristics of the interface, the vibration generated (by the multiaxial electrohydraulic vibration system located in the interior of the insulation area) is acoustically insulated and also transmitted to the test sample. This multiaxial vibroacoustic interface advantageously allows the maximum movement in all degrees of freedom of the system and minimises the noise transmission and within which the analysis and/or acoustic characterisation of the component can be carried out when it is subjected to multiaxial vibratory excitation.

In addition, the multiaxial electrohydraulic vibration system should be located in the interior of an area closed on all its faces, except for one on which only one opening is located which allows the entire mobile platform of the vibration system to be left free, enabling the use of the entire fastening surface of the same and designed with sufficient clearance to enable the maximum play required to be moved in all the degrees of freedom of the mobile platform (both linear movements: longitudinal X, transversal Y, vertical Z and angular movements: pitch, roll, yaw).

This insulation area is designed such that it does not in any way restrict the movement of the vibration system in the displacement and rotation range of the same. The insulation area implements its acoustic insulation by means of the multiaxial vibroacoustic interface formed by a series of rigid and flexible elements which are integrated into the insulation area (fixed part) and on the useful surface of the mobile platform of the multiaxial electrohydraulic vibration system (mobile part). Rigid elements are integrated into this multiaxial vibroacoustic interface which allow the structural fixation of the tool and the test sample, allowing the correct transmission of the multiaxial vibration requested up to high frequencies. Flexible elements are also integrated which improve the insulation and allow the movement of the multiaxial electrohydraulic vibration system as well as other intermediate rigid parts which function as integrating elements and as protection of the flexible elements of the multiaxial vibroacoustic interface.

This multiaxial vibroacoustic interface, when installed in the interior of the insulation area, allows the transmission of the vibrations of the multiaxial electrohydraulic vibration system to the available assembly surface of the mobile platform on the exterior of the same (interior of the anechoic chamber) and which minimises the noise transmission allowing its functioning in a multiaxial manner under the different programmable degrees of freedom (simultaneous linear and angular movements), involves a novelty with respect to a standard multiaxial electrohydraulic vibration system without insulation or with respect to equipment with basic thermal insulation by means of shaped silicone or with respect to equipment with a monolayer textile blanket as the previous tests carried out confirm. Other existing proposals do not provide the acoustic insulation required nor do they exhibit the necessary durability, they do not improve the acoustic features and they are easily damaged under conditions of multiaxial functioning. For this reason, the solution put forward has as a function to reduce the noise transmission of the mechanism to the interior of the anechoic chamber by means of the acoustic absorption which the insulating block provides which integrates the multiaxial vibroacoustic interface and also exhibits high durability. With its implementation, the noise remains controlled in the environment in which the component of the automotive vehicle is characterised acoustically, utilising the absorption properties of the materials used in the walls of the insulation area and in the multiaxial vibroacoustic interface.

The proposed solution is preferably composed of a multilayer textile block shaped and sewn into a flexible and mechanically resistant fabric which does not generate friction noise when being displaced or vibrating, with its interior filled with fibrous acoustically absorbent material, flexible and homogenously confined and which is installed as a joint between the insulation area of the multiaxial electrohydraulic vibration system and the mobile platform of the vibration system, serving as a seal of the play between both.

The multiaxial vibroacoustic interface is also preferably integrated by way of a perimeter ring, preferably metallic which allows the absorbent textile block to be mechanically fixed to the insulation area of the vibration system. Complementarily, the multiaxial vibroacoustic interface is integrated by way of a multiperforated protective plate of the useful work surface of the multiaxial electrohydraulic vibration system which also carries out the fixation function of the absorbent block to the mobile part of the vibration system.

Lastly, an insulating foam exists in the multiaxial vibroacoustic interface in order to be located on the mobile platform of the vibration system. The insulating foam also works as an acoustic absorbent and allows the free volume between fixations on the fixation surface to be covered.

This foam is fixed between a plurality of rigid studs distributed equidistantly along the entire fixation surface of the vibration system by means of the multiperforated protective plate. This plurality of studs forms a mesh which allows the fixation of the tool with the test sample in the vehicle position, directly transmitting the vibrations generated by the multiaxial electrohydraulic vibration system. Elastomeric seals are also integrated in the holes of the protective plate which favour the acoustic insulation and prevent the generation of possible noises caused by the vibration or by contact between the rigid studs and the protective plate.

The rigid studs of the multiaxial vibroacoustic interface are in turn used to transmit the vibrations generated by the multiaxial electrohydraulic vibration system to the test tool. These studs are moved integrally with the mobile platform of the multiaxial electrohydraulic vibration system, while the flexible part of the multiaxial vibroacoustic interface is moved and deformed as a function of the vibratory solicitations generated by the multiaxial electrohydraulic vibration system, carrying out its acoustic insulation work without restricting the movements of the tool and test sample.

The multiaxial vibroacoustic interface allows the vibrations to be transmitted from the interior of the insulation area, where the multiaxial electrohydraulic vibration system is located, to the test tool which is located outside, in the interior of the anechoic chamber, by way of the rigid studs. This multiaxial vibroacoustic interface is designed to function as an acoustic trap and is formed by two layers of a flexible, highly resistant material and which does not generate friction noise on the exterior. The flexible cover is filled with a material with a high acoustic absorption coefficient such that it allows transmission of the vibration to the exterior of the insulation area of the mechanisms of the vibration system without restricting movements in the range of functioning of the system, minimising the noise transmission of the mechanisms and therefore improving the features of the acoustic test installation.

### Brief description of the drawings

The invention will be described below in a series of figures which will help to understand the invention and which are expressly related to an embodiment of said invention which is presented as a non-limiting example of the same and in which the following is represented:
Figure 1 shows a perspective view of the multiaxial vibroacoustic interface implemented for the multiaxial electrohydraulic vibration system.
Figure 2 shows a perspective view of the breakdown of elements forming part of the multiaxial vibroacoustic interface of the multiaxial electrohydraulic vibration system.
Figure 3 shows a section of the multiaxial vibroacoustic interface of the multiaxial electrohydraulic vibration system.
Figure 4 shows a diagram of the multiaxial electrohydraulic vibration system for acoustic characterisation in the interior of an anechoic chamber.
Figure 5 shows a view of an exemplary test assembly, with a test sample mounted on a tool in the multiaxial electrohydraulic vibration system in which the linear and angular movements are identified.
Figure 6 shows a perspective view of a rigid fixation stud.
Figure 7 shows a perspective view of the multiperforated protective plate.
Figure 8 shows a perspective view of the insulating foam.
Figure 9 shows a perspective view of the multilayer textile cover.
Figure 10 shows a perspective view of the fixation ring to the insulation area of the mechanism of the multiaxial electrohydraulic vibration system.
Figure 11 shows a perspective view of the particular fixation mesh formed by the plurality of rigid studs.
Figure 12 shows a perspective view of the elastomeric seals of the multiaxial vibroacoustic interface between the rigid studs and the multiperforated protective plate.

### Description of a preferred embodiment of the invention

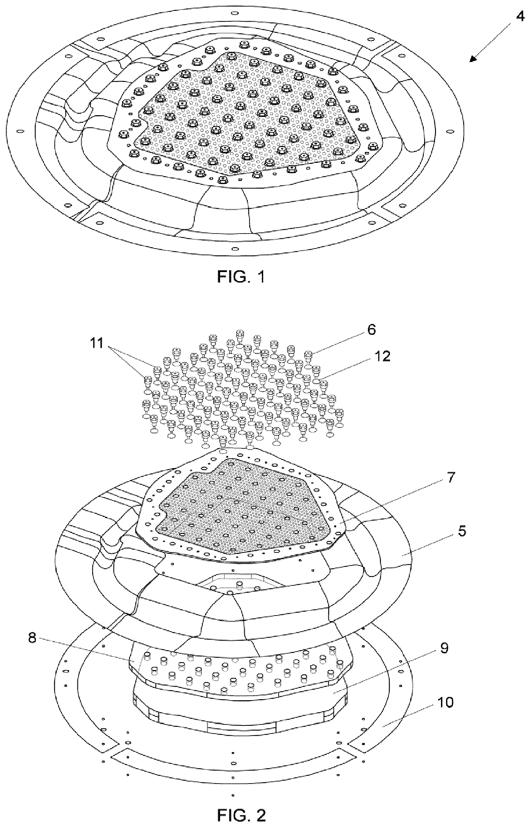

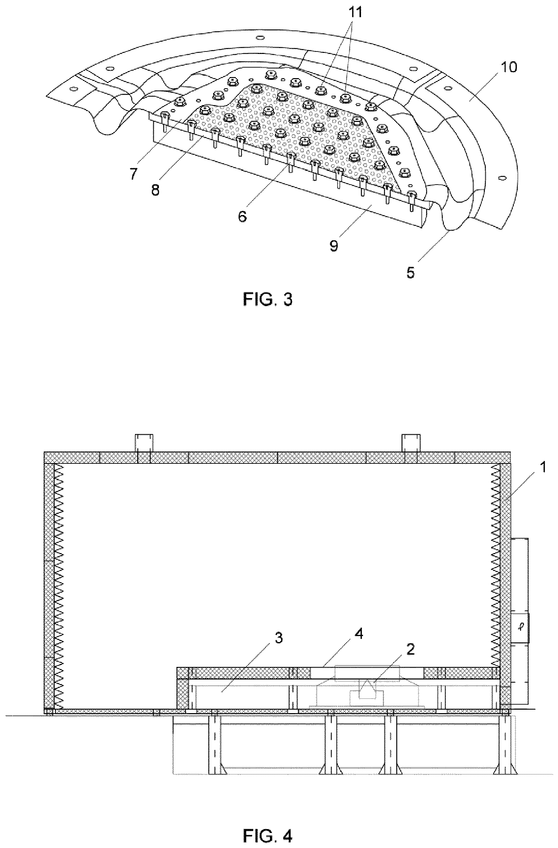

Figure 1 illustrates an exemplary multiaxial vibroacoustic interface (4) already assembled. In order to see it better, the exploded view associated with the multiaxial vibroacoustic interface (4) of Figure 1 is shown in Figure 2, while a cut corresponding to Figure 1 is accompanied in Figure 3.

In the exploded view of Figure 2, different elements of the multiaxial interface (4) are illustrated separately. A plurality of rigid studs (6) are joined by means of elastomeric seals (12) to the multiperforated protective plate (7), being adapted to the fixation mesh (11) of the multiaxial vibration equipment. The fixation mesh (11) evenly distributes said rigid studs (6) on the mobile assembly platform (9) combining a multiperforated protective plate (7), which is adapted to the fixation mesh (11), and an insulating foam (8). An insulation block (5) is interposed between the mentioned multiperforated protective plate (7) and the insulation area (3). A mobile assembly platform (9) and a fixation ring (10) are situated under the insulating foam (8).

The interior of the multiaxial vibroacoustic interface (4) is observed in the transversal section of Figure 3, where the rigid studs (6) secure the multiperforated protective plate (7) to the insulating foam (8).

The integration of the multiaxial vibroacoustic interface (4) in an anechoic chamber (1) with a multiaxial electrohydraulic vibration system (2) is represented in Figure 4. An anechoic chamber (1) allows the interior environment to be insulated from the exterior noise. This chamber can be implemented under different constructive solutions using absorbent acoustic materials (highly-absorbent rock wool panels) with the aim of obtaining an area with a low level of background noise. In addition, it may be necessary for acoustic traps to be implemented in order to allow the aeration of the anechoic chamber (1) and in order to be able to pass the cable of the microphones and accelerometers from the interior of the chamber (1) to the exterior of the same where the acoustic acquisition and analysis system and the control of the vibration system are located.

It can be seen in Figure 4 how the floor of the chamber should also be acoustically insulated (this is the reason why the chamber is considered anechoic). The multiaxial electrohydraulic vibration system (2) is usually in a central position. A requirement that is often necessary for the integration of the multiaxial electrohydraulic vibration system (2) in the anechoic chamber (1) is to take into consideration the need to design a cavity in the floor to pass the power cables and input and output hydraulic hoses of the vibration system.

The mechanisms of the multiaxial electrohydraulic vibration system (2) should be positioned in the interior of the insulation area (3), in this case, open on its top face. Thus, the entire useful surface of the mobile assembly platform (9) of the multiaxial electrohydraulic vibration system (2) can be used and the linear and angular movements of the same are also not limited. This insulation area (3), also represented as a part of Figure 4, can be constructed with the same acoustic absorbent material as the anechoic chamber (1) in order to allow the maximum attenuation of the noise generated by the multiaxial electrohydraulic vibration system (2) and thus minimise its transmission and contribution to the ambient noise level existing in the interior of the anechoic chamber (1).

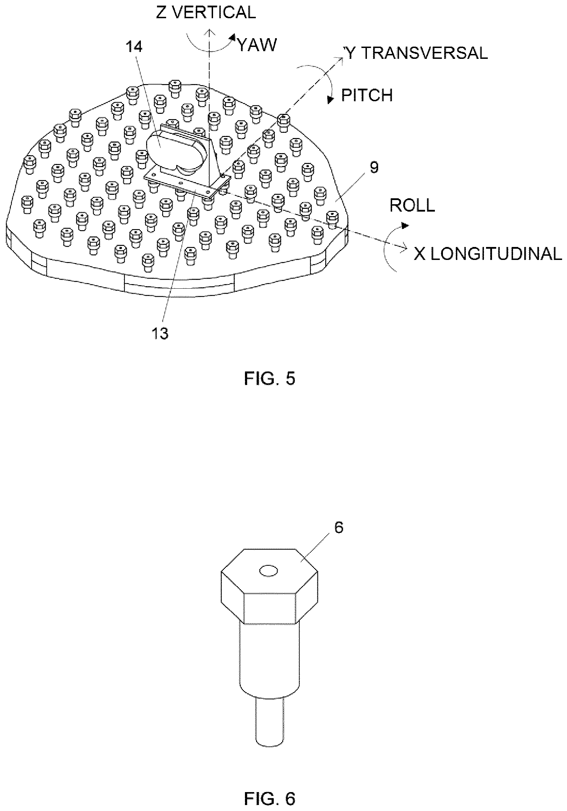

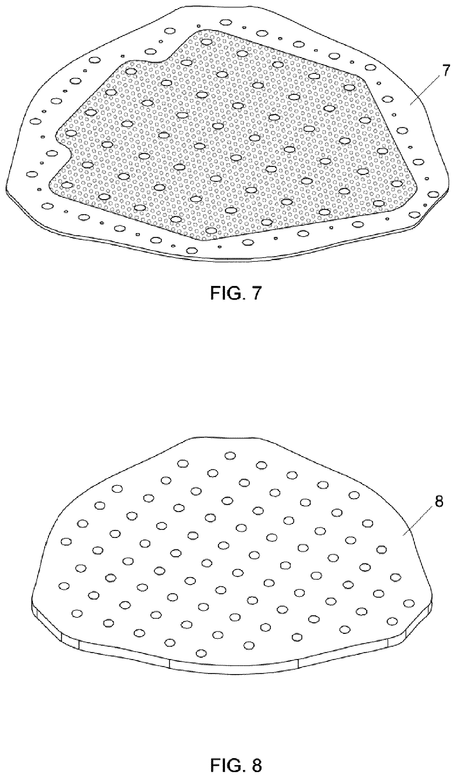

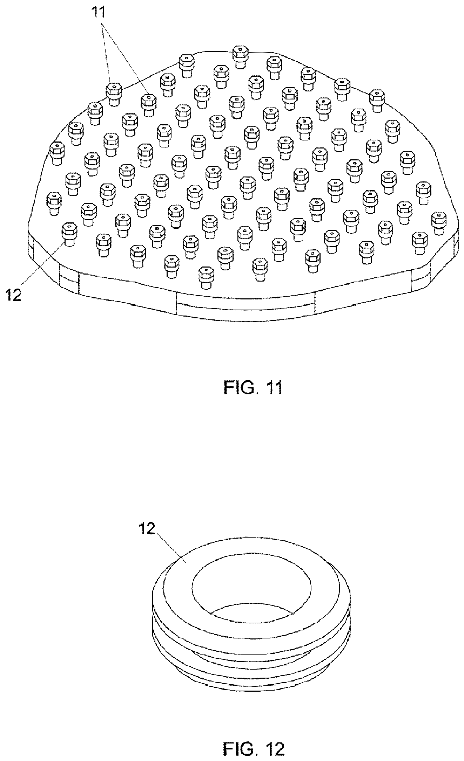

During operation, the test sample (14) is fixed to an orientation tool (13) which allows it to be placed in the desired position. For example, if the sample is an automotive part, it would be the normal position that it occupies in the vehicle, according to the main coordinate axes of the vehicle and the multiaxial electrohydraulic vibration system (2). This orientation tool (13) is responsible for supporting the sample and it transmits the vibrations to the test sample. Therefore, this tool (13) should be integrally fixed to the multiaxial electrohydraulic vibration system (4) by means of the rigid studs (6), maximising the number of fixations used of the fixation mesh (11). In this manner, the multiaxial electrohydraulic vibration system (2) remains in the interior of the insulation area (3) and the test sample (14) is outside of the same, in the interior of the anechoic chamber (1). In order to integrate both components, minimising the contribution of the intrinsic operational noise of the multiaxial electrohydraulic vibration system (2) to the level of background noise of the anechoic chamber (1), the acoustically absorbent multiaxial vibroacoustic interface (4) is designed and implemented as a solution used for the performance of the system. This multiaxial vibroacoustic interface (4) composed of rigid studs (6) of which an individual one is also represented in Figure 6, forming a particular fixation mesh (11), over the entire useful assembly surface of the mobile assembly platform (9) of the multiaxial electrohydraulic vibration system (2) and whose role it is to transmit the vibrations of the multiaxial electrohydraulic vibration system (2) to the test sample (14) which is located on the exterior of the insulation area (3). The rigid studs (6) pass through an insulating foam (8), represented in Figure 8, which covers the entire useful surface of the multiaxial electrohydraulic vibration system (2) and which is covered by a multiperforated protective plate (7) whose shape is adapted to the particular mesh of rigid fixation studs (11) of the multiaxial electrohydraulic vibration system (2) used, also represented in Figure 11, plate designed as is represented in Figure 7. This multiperforated protective plate (7) has a perimeter ring which allows the fixation of the textile cover of the insulation block of the multiaxial vibroacoustic interface (5) and has holes allowing the passage of the rigid studs (6) used for fixing the test tool (13). Rubber elastomer seals (12) are incorporated in these holes, as is represented in Figure 12, which improve the acoustic insulation of the multiaxial vibroacoustic interface (4), preventing mechanical contact between the rigid studs (6) and the protective plate (7).

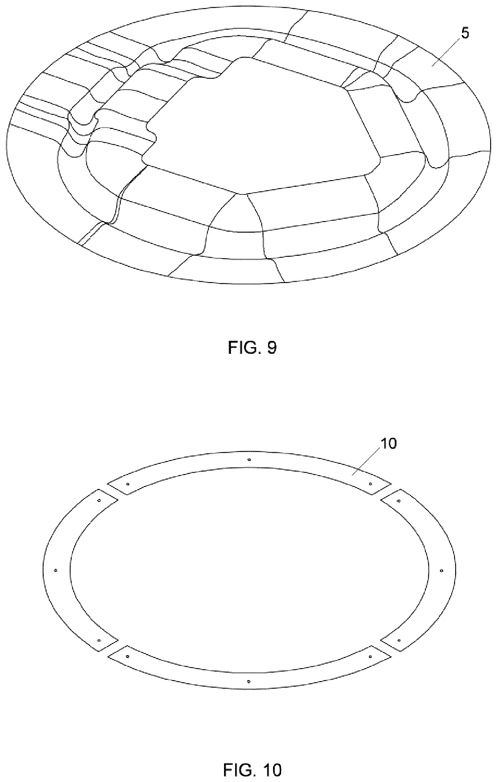

In addition, an insulation block (5) is designed and implemented, formed by a textile cover shaped and sewn into a flexible and mechanically resistant fabric which does not generate any friction noise, with its interior filled with acoustically absorbent material, as is represented in Figure 9. Examples of suitable materials for use as insulating materials are: textile fibre sheets, rock wools or panels of regenerated cotton with thermofusible fibres.

This insulation block (5) is installed as a joint between the insulation area (3) of the multiaxial electrohydraulic vibration system (2) and the mobile assembly platform (9) of the multiaxial electrohydraulic vibration system (2), serving as a closure of the play between both without limiting their function in any of the degrees of freedom of the same.

For the joining of said insulation block (5) to the insulation area of the multiaxial electrohydraulic vibration system (2), a fixation ring (10) is used divided into four quadrants, as is represented in Figure 10. The fixation ring (10) allows its mechanical joining over its entire perimeter to the insulation area (3) while allowing the compensation of misalignments in the fixation points of the insulation area. The joining between quadrants is carried out by means of acoustically absorbent flaps which do not allow complete perimeter closure. This textile cover of the insulation block (5) is also fixed to the useful assembly surface of the mobile assembly platform (9) of the multiaxial electrohydraulic vibration system (2) owing to the perimeter fixation function which the fixation ring (10) has for the multiperforated protective plate (7).

The anechoic chamber (1) should be designed such that it has a space so that a test engineer can handle and work around the test sample (14) and have room in order to allow placement, at different distances, of the microphones which allow measurement of the noise generated by the component or sample to be tested when it is subjected to multiaxial vibration.

In order to position the test sample (14), a tool (13) can be used which allows its fixation to the multiaxial electrohydraulic vibration system (2). For this fixation, the greatest possible number of rigid studs (6) of the fixation mesh (11) should be used, represented for this particular case in Figure 11 such that the system has stable vibratory behaviour which means that the electronic control is capable of controlling the acceleration and frequency levels and supporting the weight of the tool (13) together with the test sample (14).

### Numerical references:

- 1-: Anechoic chamber
- 2-: Multiaxial electrohydraulic vibration system
- 3-: Insulation area
- 4-: Multiaxial vibroacoustic interface
- 5-: Insulation block
- 6-: Rigid stud
- 7-: Multiperforated protective plate
- 8-: Insulation foam
- 9-: Mobile assembly platform
- 10-: Fixation ring
- 11-: Mesh of rigid fixation studs
- 12-: Elastomeric seal
- 13-: Tool
- 14-: Test sample

## Claims

1. A multiaxial vibroacoustic interface (4) for a multiaxial electrohydraulic vibration system (2) for acoustic characterisation, the multiaxial vibroacoustic interface (4) comprising:
- a multiperforated protective plate (7) configured to receive a plurality of rigid studs (6) to fix a test sample (14);
- an insulating foam (8) configured to be installed on a mobile assembly platform (9) of the multiaxial electrohydraulic vibration system (2);
**characterized in that** multiaxial vibroacoustic interface (4) further comprises:
- an insulation block (5) comprising a cover of flexible fabric filled with acoustically absorbent material, where the insulation block (5) is placed between the multiperforated protective plate (7) and the insulating foam (8), and these elements are fixed together, and to the assembly plate (9) of the vibration system (2), with the studs (6) and the perimeter of the multiperforated protective plate (7).

2. The multiaxial vibroacoustic interface (4) according to claim 1, which further comprises a tool (13) configured to orientate and structurally fix the test sample (14) to the multiperforated plate (7) by means of at least one rigid stud (6).

3. The multiaxial vibroacoustic interface (4) according to claim 1 or 2, wherein the multiperforated plate (7) comprises a plurality of elastomeric seals (12) to be coupled to the rigid studs (6).

4. The multiaxial vibroacoustic interface (4) according to claim 1, wherein the acoustically absorbent material of the interior of the insulation block (5) comprises at least one of the following: textile fibre, rock wools, panels of cotton regenerated with thermofusible fibres or a combination thereof.

5. The multiaxial vibroacoustic interface (4) according to any one of the preceding claims, which comprises a fixation ring (10) with a perimeter for joining along said perimeter and mechanically the insulation block (5) with the multiaxial electrohydraulic vibration system (2).

6. The multiaxial electrohydraulic vibration system (2) for an anechoic chamber (1) which comprises the multiaxial vibroacoustic interface (4) according to any one of the preceding claims.

7. The multiaxial electrohydraulic vibration system (2) according to claim 6, which comprises a mobile assembly platform (9), wherein the multiaxial vibroacoustic interface (4) is coupled.

8. An anechoic chamber (1) which comprises an insulation area (3) comprising the multiaxial electrohydraulic vibration system (2) according to claim 6 or 7.

## Patentansprüche

1. Mehrachsige vibroakustische Schnittstelle (4) für ein mehrachsiges elektrohydraulisches Vibrationssystem (2) zur akustischen Charakterisierung, wobei die mehrachsige vibroakustische Schnittstelle (4) Folgendes umfasst:
- eine mehrfach gelochte Schutzplatte (7), die zur Aufnahme einer Vielzahl starrer Bolzen (6) zur Fixierung eines Prüfkörpers (14) ausgelegt ist;
- einen Isolierschaum (8), der zum Aufbringen auf einer beweglichen Montageplattform (9) des mehrachsigen elektrohydraulischen Vibrationssystems (2) ausgelegt ist;
**dadurch gekennzeichnet, dass** die mehrachsige vibroakustische Schnittstelle (4) ferner Folgendes umfasst:
- einen Isolierblock (5), der eine Schicht aus flexiblem, mit schallabsorbierendem Material gefülltem Gewebe umfasst, wobei der Isolierblock (5) zwischen der mehrfach gelochten Schutzplatte (7) und dem Isolierschaum (8) angeordnet ist und diese Elemente aneinander sowie über die Bolzen (6) und den äußeren Rand der mehrfach gelochten Schutzplatte (7) an der Montageplattform (9) des Vibrationssystems (2) befestigt sind.

2. Mehrachsige vibroakustische Schnittstelle (4) nach Anspruch 1, die ferner ein Werkzeug (13) umfasst, das dazu ausgelegt ist, den Prüfkörper (14) mittels mindestens eines starren Bolzens (6) an der mehrfach gelochten Platte (7) auszurichten und fest zu verankern.

3. Mehrachsige vibroakustische Schnittstelle (4) nach Anspruch 1 oder 2, wobei die mehrfach gelochte Platte (7) eine Vielzahl von mit den starren Bolzen (6) zu verbindenden Elastomerdichtungen (12) aufweist.

4. Mehrachsige vibroakustische Schnittstelle (4) nach Anspruch 1, wobei das schallabsorbierende Material im Inneren des Isolierblocks (5) mindestens eines der folgenden Materialien aufweist: Textilfasern, Steinwolle, Platten aus mit thermoplastischen Fasern regenerierter Baumwolle oder eine Kombination daraus.

5. Mehrachsige vibroakustische Schnittstelle (4) nach einem der vorstehenden Ansprüche, die einen Befestigungsring (10) mit einem äußeren Rand zur mechanischen Verbindung des Isolierblocks (5) mit dem mehrachsigen elektrohydraulischen Vibrationssystem (2) entlang des genannten äußeren Rands umfasst.

6. Mehrachsiges elektrohydraulisches Vibrationssystem (2) für eine Absorberkammer (1), das die mehrachsige vibroakustische Schnittstelle (4) nach einem der vorstehenden Ansprüche umfasst.

7. Mehrachsiges elektrohydraulisches Vibrationssystem (2) nach Anspruch 6 mit einer beweglichen Montageplattform (9), an die die mehrachsige vibroakustische Schnittstelle (4) angekoppelt ist.

8. Absorberkammer (1) mit einem Isolierbereich (3), der das mehrachsige elektrohydraulische Vibrationssystem (2) nach Anspruch 6 oder 7 enthält.

## Revendications

1. Interface vibroacoustique multiaxiale (4) pour un système de vibration électrohydraulique multiaxial (2) pour une caractérisation acoustique, l'interface vibroacoustique multiaxiale (4) comprenant :
- une plaque de protection multiperforée (7) configurée pour recevoir une pluralité de plots rigides (6) pour fixer un échantillon d'essai (14) ;
- une mousse isolante (8) configurée pour être installée sur une plate-forme d'assemblage mobile (9) du système de vibration électrohydraulique multiaxial (2) ;
**caractérisé en ce que** l'interface vibroacoustique multiaxiale (4) comprend en outre :
- un bloc d'isolation (5) comprenant une couverture de tissu flexible rempli de matériau acoustiquement absorbant, où le bloc d'isolation (5) est placé entre la plaque de protection multiperforée (7) et la mousse isolante (8), et ces éléments sont fixés ensemble, et à la plaque d'assemblage (9) du système de vibration (2), avec les goujons (6) et le périmètre de la plaque de protection multiperforée (7).

2. Interface vibroacoustique multiaxiale (4) selon la revendication 1, qui comprend en outre un outil (13) configuré pour orienter et fixer structurellement l'échantillon de test (14) à la plaque multiperforée (7) au moyen d'au moins un goujon rigide (6).

3. Interface vibroacoustique multiaxiale (4) selon la revendication 1 ou 2, dans laquelle la plaque multiperforée (7) comprend une pluralité de joints élastomères (12) destinés à être couplés aux goujons rigides (6).

4. Interface vibroacoustique multiaxiale (4) selon la revendication 1, dans laquelle le matériau acoustiquement absorbant de l'intérieur du bloc d'isolation (5) comprend au moins l'un des éléments suivants : fibre textile, laine de roche, panneaux de coton régénéré avec des fibres thermofusibles ou une combinaison de ceux-ci.

5. L'interface vibroacoustique multiaxiale (4) selon l'une quelconque des revendications précédentes, qui comprend un anneau de fixation (10) avec un périmètre pour joindre le long dudit périmètre et mécaniquement le bloc d'isolation (5) avec le système de vibration électrohydraulique multiaxial (2).

6. Système de vibration électrohydraulique multiaxial (2) pour une chambre anéchoïque (1) qui comprend l'interface vibroacoustique multiaxiale (4) selon l'une quelconque des revendications précédentes.

7. Système de vibration électrohydraulique multiaxial (2) selon la revendication 6, qui comprend une plateforme d'assemblage mobile (9), dans laquelle est couplée l'interface vibroacoustique multiaxiale (4).

8. Chambre anéchoïque (1) qui comprend une zone d'isolation (3) comprenant le système de vibration électrohydraulique multiaxial (2) selon la revendication 6 ou 7.
